# DEMANDE DE BREVET EUROPEEN

(11) **EP 1 351 051 A1**
(43) Date de publication de la demande: **08.10.2003**
(21) Numéro de dépôt: 03100522.6
(22) Date de dépôt: 03.03.2003
(51) Int. Cl.: G01N 23/18, G01B 15/02

(54) **Procédé et dispositif de contrôle de pièces par rayons X**

(30) Priorité: 05.03.2002 FR 0202759
(71) Demandeur: AIRBUS FRANCE, 31060 Toulouse (FR)
(72) Inventeur: DE SMET, Marie-Anne, 32600, MONBRUN (FR)
(74) Mandataire: Poulin, Gérard

(57) **Abrégé**

Le contrôle non destructif d'une structure de (10) telle qu'un fuselage d'aéronef est effectué en plaçant une source (16) de rayons X d'un côté de celle-ci et une caméra numérique (24) de l'autre côté. L'image délivrée par la caméra numérique est analysée en temps réel dans un micro-ordinateur (28). Si cette image n'est pas exploitable, on modifie immédiatement au moins un réglage de la source (16) et on procède sans plus tarder à une nouvelle acquisition. Le réglage peut être effectué manuellement ou à l'aide d'un asservissement. Il peut concerner la longueur d'onde du faisceau de rayons X, le niveau de dose ou le temps de pose si le défaut a trait au niveau de gris de l'image. Dans le cas où on utilise une source directionnelle, le défaut peut aussi concerner la netteté de l'image et avoir pour origine un problème d'alignement.

## Description

### Domaine technique

L'invention concerne un procédé de contrôle non destructif sur site de pièces mécaniques, telles que des structures aéronautiques ou spatiales, par la technique des rayons X.

L'invention concerne également un dispositif conçu pour mettre en oeuvre ce procédé.

Le procédé et le dispositif selon l'invention peuvent être appliqués au contrôle non destructif sur site de toute pièce mécanique réalisée en un matériau quelconque tel qu'un métal, une matière plastique ou un matériau composite, et notamment aux pièces de grandes dimensions telles que celles qui équipent les aéronefs, les sondes spatiales et les satellites.

### Etat de la technique

Les structures des aéronefs, des sondes spatiales et des satellites font l'objet, lors de leur fabrication, d'un certain nombre de contrôles visant notamment à détecter la présence éventuelle de fissures ou l'existence éventuelle de délaminages dans les matériaux composites, et à vérifier que des organes d'assemblage tels que des rivets remplissent correctement leurs fonctions.

Lorsque les aéronefs sont en exploitation, des contrôles comparables sont effectués périodiquement sur différentes zones de leurs structures, également dans le but de détecter des défauts (présence d'eau, fissure, corrosion, délaminage,...) et d'effectuer, si nécessaire, les réparations appropriées.

Parmi les différentes méthodes de contrôle non destructif utilisées à cette fin, on connaît notamment la technique du contrôle par les rayons X.

Selon cette technique, on place une source génératrice de rayons X d'un côté de la pièce à contrôler et des films sensibles aux rayons X de l'autre côté de ladite pièce. Plus précisément, on utilise généralement une source directionnelle que l'on place, par exemple, à l'intérieur d'un fuselage d'avion, sensiblement au centre de celui-ci, et que l'on oriente radialement vers la paroi du fuselage. On dispose par ailleurs une série de films sensibles aux rayons X sur la surface extérieure de ladite paroi, sur la totalité de la zone que l'on désire contrôler. A cet effet, on utilise une bande adhésive destinée à immobiliser les films sur la paroi du fuselage.

La source génératrice de rayons X est choisie et réglée en fonction des caractéristiques attendues de la pièce à contrôler. Ce choix concerne à la fois la longueur d'onde du rayonnement (généralement exprimée en kV) et la quantité de rayons émis, ou "niveau de dose" (généralement exprimée en mA).

Lorsque la source est mise en fonctionnement, c'est-à-dire pendant la période dite "de tir", toutes les personnes présentes doivent être évacuées au-delà d'un périmètre de sécurité dont la superficie dépend du niveau de dose émis par la source. Afin de limiter les risques, les tirs sont habituellement effectués de nuit.

Pour effectuer le contrôle d'une zone déterminée, on effectue une série de tirs en modifiant l'orientation de la source entre deux tirs successifs. La durée de chacun des tirs est généralement comprise entre 2 et 5 minutes, pour permettre l'exposition aux rayons X du film détecteur placé de l'autre côté de la pièce. Ce temps est multiplié par le nombre de tirs successifs nécessaire au contrôle de la zone considérée.

Lorsque la série de tirs est terminée, on démonte les films et on les amène sur le site de développement, afin de développer chacun d'entre eux à tour de rôle. Les résultats ainsi obtenus doivent ensuite être interprétés. Dans la pratique, l'ensemble de ces opérations ajouté aux tirs proprement dit conduit habituellement à immobiliser l'aéronef ou la structure contrôlée pendant une nuit complète.

Il arrive relativement fréquemment (environ une fois sur deux en moyenne) que les résultats obtenus après le développement des films révèlent que le réglage initial de la source n'était pas adapté à la structure contrôlée ou que les films ont bougé pendant leur exposition aux rayons X. Dans ce cas, toutes les opérations qui viennent d'être décrites doivent être renouvelées. La durée d'immobilisation de l'aéronef ou de toute autre structure contrôlée par ce procédé est alors doublée.

Lorsqu'une telle procédure de contrôle par la technique des rayons X est appliquée à la maintenance des aéronefs, elle se traduit souvent par l'immobilisation simultanée de plusieurs avions qui se trouvent dans le même hangar que l'avion contrôlé, à l'intérieur du périmètre de sécurité. Si le temps d'immobilisation est doublé parce que le contrôle doit être recommencé, cela se traduit par un préjudice important pour la ou les compagnies aériennes concernées.

D'autre part, les exigences de "traçabilité" imposent aux compagnies aériennes de conserver pendant 10 à 30 ans les films obtenus lors des contrôles successifs effectués sur chaque avion. Pour une compagnie disposant d'une flotte importante, cela se traduit par une procédure de gestion très lourde.

Le problème du stockage des films non encore utilisés se traduit aussi par une procédure de gestion lourde : en effet, de tels films doivent être conservés dans des conditions de température et d'hygrométrie très strictes afin d'éviter la détérioration de leurs caractéristiques techniques.

Lorsqu'un film est défectueux (défaut de fabrication, perte de ses caractéristiques techniques,...), il n'est pas possible de s'apercevoir de son défaut autrement qu'en le développant, c'est-à-dire après son utilisation lors d'un tir, ce qui oblige à réitérer le tir.

Si un film précédemment utilisé est rangé, par erreur, avec les films vierges, il n'est pas possible non plus de s'en apercevoir, sauf par un développement du film après son utilisation lors d'un tir.

Pour la mise en oeuvre des techniques de contrôle non destructif utilisant les rayons X, il est également connu de remplacer la source directionnelle par une source panoramique, qui émet des rayons X dans toute la zone contrôlée, sans qu'il soit nécessaire d'en modifier l'orientation entre deux tirs successifs.

Toutefois, de telles sources panoramiques sont très rarement utilisées en raison de leur coût. De plus, elles ne permettent pas de résoudre les problèmes qui découlent de l'utilisation des films.

### Exposé de l'invention

L'invention a principalement pour but de proposer un procédé et un dispositif de conception nouvelle, permettant de résoudre au moins en partie les problèmes posés par les procédés et les dispositifs de l'art antérieur mettant en oeuvre des films de détection des rayons X.

Plus précisément, l'invention a pour but de proposer un procédé et un dispositif permettant de réduire considérablement le temps d'immobilisation de la structure contrôlée et de simplifier la procédure d'acquisition, de traitement et de stockage des données ainsi obtenues.

Conformément à l'invention, ce résultat est obtenu au moyen d'un procédé de contrôle non destructif d'une structure, selon lequel on exécute une première étape d'acquisition d'image consistant à émettre un faisceau de rayons X à l'aide d'une source émettrice de rayons X placée d'un côté de la structure et à détecter ledit faisceau de l'autre côté de la structure, de façon à obtenir une image de ladite structure traversée par les rayons X, caractérisé en ce qu'on détecte ledit faisceau au moyen d'une caméra numérique détectant les rayons X, on analyse en temps réel l'image de la structure délivrée par la caméra numérique, afin de déterminer si cette image est exploitable ou non et, s'il est déterminé que l'image n'est pas exploitable, on modifie au moins un réglage de ladite source et on exécute alors une nouvelle étape d'acquisition d'image et une nouvelle analyse de l'image en temps réel.

L'utilisation d'une caméra numérique détectant les rayons X pour détecter le faisceau de l'autre côté de la structure à contrôler permet de disposer, en temps réel, de l'image de ladite structure. On peut ainsi déterminer immédiatement si l'image est ou non exploitable. Dans la négative, on modifie le ou les réglages révélés défectueux par l'image fournie par la caméra numérique (les réglage peuvent être défectueux car la structure à contrôler se révèle différente de celle qui aurait du, théoriquement, être testée), puis on exécute une nouvelle étape d'acquisition d'image et une nouvelle analyse de celle-ci, en temps réel. On réalise ainsi un gain de temps très important, notamment dans le cas où les réglages initiaux ne sont pas bons, comme cela arrive en moyenne pour environ une opération de contrôle sur deux. Lorsque le contrôle concerne des aéronefs, on comprend que ce gain de temps constitue un avantage considérable pour les compagnies aériennes dont les avions sont immobilisés.

En outre, l'utilisation d'une caméra numérique nécessite un niveau de dose moindre que le niveau requis lors de l'utilisation d'un film. En conséquence, la superficie du périmètre de sécurité pendant la période de tir peut être diminuée.

De plus, du fait de sa petite taille, une caméra numérique peut être glissée dans des endroits qui auraient nécessité auparavant un démontage de la structure, avec l'utilisation de films.

Des indicateurs de qualité, tels que des fils de diamètres différents, permettent de déterminer en temps réel si l'image est exploitable ou non. Ces indicateurs peuvent être fixés sur un côté de l'objectif de la caméra, pour permettre un réglage continu.

Selon un premier aspect de l'invention, on détermine que l'image n'est pas exploitable lorsque l'une au moins des grandeurs constituées par le niveau de gris et la netteté de l'image ne permet pas de détecter d'éventuels défauts recherchés dans la structure dont on effectue le contrôle.

Lorsque le niveau de gris de l'image ne permet pas de détecter d'éventuels défauts recherchés dans ladite structure, on modifie l'un au moins des réglages de la source constitués par la longueur d'onde du faisceau de rayons X, le niveau de dose et le temps de pose.

Dans un premier mode de réalisation de l'invention, on utilise une source directionnelle. Dans ce cas, lorsque la netteté de l'image ne permet pas de détecter d'éventuels défauts recherchés dans ladite structure, on modifie l'orientation de la source.

S'il est déterminé que l'image n'est pas exploitable, on peut alors procéder à un réglage manuel de la source. Toutefois, selon un mode de réalisation préféré de l'invention, on modifie avantageusement au moins un réglage de la source de façon automatisée, en temps réel.

Selon le premier mode de réalisation de l'invention, on utilise une source directionnelle et on déplace simultanément, de manière automatisée, la source et la caméra numérique selon un trajet prédéterminé, de façon à balayer une zone à contrôler de ladite structure. Dans ce cas, le détecteur peut être asservi sur la source, ou inversement.

Selon un deuxième mode de réalisation de l'invention, on utilise une source panoramique et on déplace la caméra numérique de manière automatisée selon un trajet prédéterminé, de façon à balayer une zone à contrôler de ladite structure.

L'invention a également pour objet un dispositif de contrôle non destructif d'une structure, comprenant une source émettrice de rayons X apte à être placée d'un côté de la structure et à émettre un faisceau de rayons X, des moyens de détection dudit faisceau, aptes à être placés de l'autre côté de la structure, de façon à obtenir une image de la structure traversée par les rayons X, caractérisé en ce que les moyens de détection comprennent une caméra numérique détectant les rayons X, le dispositif de contrôle comprenant de plus des moyens pour analyser en temps réel l'image de la structure délivrée par la caméra numérique, afin de déterminer si cette image est exploitable ou non, et des moyens pour modifier au moins un réglage de la source, s'il est déterminé que l'image n'est pas exploitable.

### Brève description des dessins

On décrira à présent, à titre d'exemples illustratifs et nullement limitatifs, deux modes de réalisation préférés de l'invention, en se référant aux dessins annexés, dans lesquels :
- la figure 1 est une vue en coupe partielle, illustrant de façon schématique un dispositif de contrôle non destructif utilisant une source directive selon un premier mode de réalisation de l'invention, appliqué au contrôle d'une zone du fuselage d'un aéronef ;
- la figure 2 est une vue en coupe partielle comparable à la figure 1, illustrant de façon schématique un dispositif de contrôle non destructif utilisant une source panoramique selon un deuxième mode de réalisation de l'invention, appliqué au contrôle d'une zone du fuselage d'un aéronef.

### Exposé détaillé de modes de réalisation préférés de l'invention

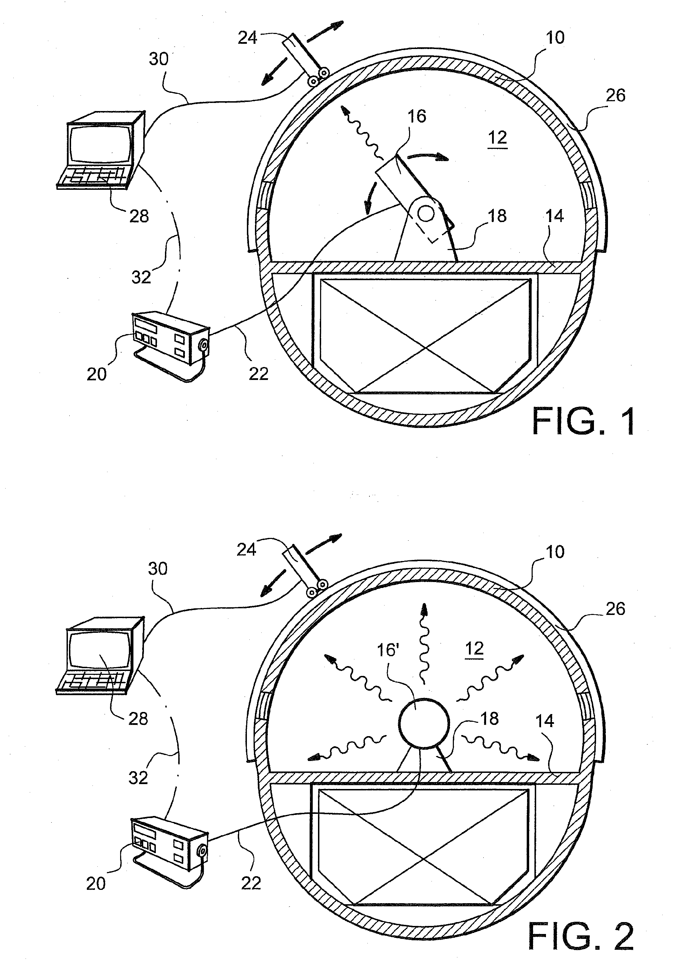

Les figures 1 et 2 illustrent deux modes de réalisation d'un dispositif de contrôle non destructif par rayons X conforme à l'invention. Dans les deux cas, le dispositif est utilisé pour contrôler une zone déterminée du fuselage d'un aéronef. Toutefois, cette application ne constitue qu'un exemple de mise en oeuvre du procédé selon l'invention. En effet, le dispositif conforme à l'invention peut être utilisé dans tous les cas où l'on désire contrôler une structure de relativement grandes dimensions par les rayons X en un temps aussi court que possible et sans qu'il soit nécessaire de recommencer plusieurs fois cette opération. Ainsi, les applications possibles de l'invention concernent aussi bien des structures en cours de fabrication que des structures usagées, dans les domaines aéronautique, spatial, maritime, ferroviaire, etc..

Sur les figures 1 et 2, la référence 10 désigne le fuselage d'un aéronef, dont une zone déterminée, délimitant dans ce cas la cabine 12 de l'aéronef, doit subir un contrôle structurel non destructif par les rayons X.

Dans le mode de réalisation illustré sur la figure 1, on place à l'intérieur de la cabine 12, sur le plancher 14 de celle-ci, une source 16 émettrice de rayons X, de type directionnel. Plus précisément, la source 16 est montée sur le plancher 14 par l'intermédiaire d'un support 18. Le support 18 est équipé de moyens (non représentés) permettant de modifier de façon contrôlée l'orientation de la source 16, comme l'illustrent schématiquement les flèches.

La source 16 peut être constituée par tout générateur de rayons X apte à émettre un faisceau divergeant de rayons X selon une longueur d'onde et un niveau de dose généralement réglables. Le temps de pose, qui correspond à la durée d'émission du faisceau, est également réglable.

Les réglages de la source 16 sont effectués grâce à une unité de contrôle 20, qui permet à un opérateur d'afficher les caractéristiques souhaitées. L'unité de contrôle 20 est placée en dehors du périmètre de sécurité qui doit être formé autour de la source 16, lorsque le tir est effectué. A cet effet, l'unité de contrôle 20 est placée à l'extérieur de l'aéronef et reliée à la source 16 par un câble 22. En variante ou de façon complémentaire, une liaison sans fil, par exemple par voie hertzienne, peut également être prévue entre l'unité de contrôle et la source de rayons X.

L'agencement qui vient d'être décrit permet à un opérateur de régler à distance la longueur d'onde, le niveau de dose et le temps de pose du faisceau de rayons X délivré par la source, puis de commander chacun des tirs de cette dernière, en agissant sur l'unité de contrôle 20.

Cet agencement permet également à un opérateur de modifier à distance l'orientation de la source 16, en commandant son déplacement sur son support 18, à partir de l'unité de contrôle 20.

Conformément à l'invention, le dispositif de contrôle non destructif illustré sur la figure 1 comprend également des moyens de détection constitués par une caméra numérique 24, prévue pour être placée à l'extérieur du fuselage 10, dans le prolongement du faisceau de rayons X émis par la source 16.

La caméra numérique 24 comprend un scintillateur, c'est-à-dire un écran transparent luminescent, que viennent heurter les rayons X incidents, après qu'ils aient traversé la paroi du fuselage 10. A l'intérieur de la caméra, une optique constituée par un objectif grossissant de diffraction réduite dirige le faisceau lumineux issu du scintillateur sur une matrice de diodes CCD, qui transforment ce faisceau lumineux en signaux électriques. En d'autres termes, la caméra numérique 24 délivre en temps réel des signaux électriques qui sont représentatifs de l'image de la région de la paroi du fuselage traversée par le faisceau de rayons X émis par la source 16.

Dans le mode de réalisation illustré schématiquement sur la figure 1, la caméra numérique 24 est montée sur la surface extérieure de la zone à contrôler du fuselage 10, par exemple au moyen d'un ou plusieurs rails 26. Plus précisément, les rails 26 permettent à la caméra numérique 24 de se déplacer sur toute la zone circonférentielle du fuselage 10 que l'on désire contrôler. Si nécessaire, un mécanisme (non représenté) permet également de déplacer la caméra 24 selon une direction parallèle à l'axe longitudinal du fuselage, par rapport aux rails 26. Des moyens de motorisation (non représentés) sont associés à cet ensemble pour assurer le déplacement de la caméra numérique 24 le long des rails 26 et de tout autre mécanisme associé. Ce déplacement est illustré schématiquement par des flèches sur la figure 1.

Les signaux électriques délivrés par la caméra numérique 24, représentatifs de l'image de la région de la paroi du fuselage traversée par le faisceau de rayons X, sont transmis à des moyens aptes à analyser cette image en temps réel. Ces moyens d'analyse sont matérialisés par un micro-ordinateur 28.

Comme l'unité de contrôle 20, le micro-ordinateur 28 doit être placé en dehors du périmètre de sécurité prévu autour de la source de rayons X 16, afin de pouvoir être utilisée sans risque par les opérateurs. Le micro-ordinateur 28 est donc placé à l'extérieur de l'aéronef dont on effectue le contrôle.

La liaison entre le micro-ordinateur 28 et la caméra numérique 24 est assurée par un câble 30. En variante, le micro-ordinateur 28 peut aussi être relié à la caméra numérique 24 par une liaison sans fil telle qu'une liaison hertzienne. Ces deux types de liaison peuvent aussi être utilisées simultanément.

Il est à noter que les moteurs (non représentés) permettant de déplacer la caméra numérique 24 sur les rails 26 et sur tout autre mécanisme associé sont également commandés à distance, depuis l'extérieur du périmètre de sécurité. Cette commande à distance est avantageusement couplée à celle qui permet de modifier l'orientation de la source de rayons X 16, afin de préserver l'alignement de la caméra numérique 24 sur la source 16, lorsque la caméra se déplace. Comme on l'a déjà indiqué, cette commande est effectuée, par exemple, à partir de l'unité de contrôle 20, au travers d'un câble de liaison. Toutefois, tout autre agencement est possible, sans sortir du cadre de l'invention.

Lorsque le dispositif de contrôle conforme à l'invention est utilisé pour contrôler une structure ouverte telle que, par exemple, un élément de voilure d'aéronef, la source de rayons X 16 et la caméra numérique 24 peuvent être reliées directement par un mécanisme rigide chevauchant cette structure.

La mise en oeuvre du dispositif de contrôle qui vient d'être décrit en référence à la figure 1 va à présent être expliquée.

Dans un premier temps, lorsque la source 16 et la caméra numérique 24 ne sont pas liées mécaniquement, on procède à leur alignement selon une première ligne de tir parmi un ensemble de lignes de tir correspondant à l'ensemble de la zone à contrôler. A cet effet, on utilise différents moyens prévus à cet effet, tels que des repères d'orientation et de position agencés sur le support 18 et sur les rails 26, des viseurs, etc..

D'autre part, on règle la source de rayons X en tenant compte des caractéristiques attendues de la structure contrôlée, conformément à la pratique usuelle. Ce réglage concerne la longueur d'onde du faisceau de rayons X émis par la source, le niveau de dose (c'est-à-dire la puissance du faisceau) et le temps de pose.

Lorsque les réglages sont terminés, on procède à un premier tir. On obtient ainsi, en temps réel, une image de la structure qui se trouve entre la source 16 et la caméra numérique 24. A partir de cette image qui s'affiche instantanément sur le micro-ordinateur 28, il est possible de savoir de manière pratiquement instantanée si celle-ci est exploitable ou non. Ce jugement peut être fait soit par un opérateur qui observe l'image affichée sur l'écran du micro-ordinateur 28, soit par un logiciel adapté, qui traite directement les signaux en provenance de la caméra numérique 24.

Le caractère exploitable ou non exploitable de l'image délivrée par la caméra numérique 24 est déterminé, d'une part, en fonction du niveau de gris de cette image et, d'autre part, en fonction de sa netteté.

Lorsque le niveau de gris ne permet pas d'exploiter l'image délivrée par la caméra numérique, cela signifie, comme le sait l'homme du métier, que l'un au moins des réglages de la source de rayons X 16 n'est pas satisfaisant et doit être modifié. Ainsi, il est alors nécessaire de modifier la longueur d'onde du faisceau de rayons X, le niveau de dose et/ou le temps de pose, afin d'obtenir une image dont le niveau de gris soit satisfaisant.

Conformément à l'invention, cette information est immédiatement disponible et prise en compte, soit pour effectuer une modification manuelle des réglages de la source sur l'unité de contrôle 20, soit par un asservissement qui modifie directement les réglages en agissant sur ladite unité de contrôle par une liaison symbolisée par le trait mixte 32 sur la figure 1.

Lorsque l'image délivrée instantanément par la source de rayons X 16 n'est pas exploitable en raison d'un défaut de netteté, cela peut notamment se produire, comme le sait l'homme du métier, lorsque l'alignement de la caméra numérique 24 et de la source n'est pas bon, en cas de vibrations ou en présence d'un niveau de dose insuffisant.

Conformément à l'invention, cette information est, elle aussi, directement disponible et prise en compte. Comme lorsqu'il s'agit d'un défaut concernant le niveau de gris, cette information peut être exploitée manuellement ou par un asservissement approprié, en agissant sur l'un au moins des moteurs permettant d'orienter la source 16 sur son support 18 et de déplacer la caméra numérique 24 sur les rails 26 ou sur un éventuel mécanisme associé.

Ainsi, l'invention permet d'obtenir de façon certaine une image exploitable de la zone contrôlée de la structure, en un temps très bref lorsque la correction est faite manuellement et de façon pratiquement instantanée lorsqu'on utilise un asservissement.

De plus, du fait que l'image de la zone contrôlée est numérisée par la caméra 24, cette image peut être stockée de manière particulièrement aisée sur tout type de support, et notamment sur les supports informatiques classiques, pendant une période de temps très longue, sans contrainte particulière. Il en résulte notamment une diminution très sensible du volume nécessaire à l'archivage des images et une amélioration de la traçabilité, par rapport aux techniques classiques de contrôle par rayons X mettant en oeuvre des moyens de détection constitués par des films photographiques.

Lorsqu'un premier tir a été effectué et que des réglages de la source et/ou de l'alignement source-caméra numérique se sont révélés nécessaires, on effectue un nouveau tir, de façon à acquérir une image exploitable, permettant de détecter des défauts de la structure, tels que des fissures, du vide, de la porosité, une délamination, etc..

On effectue ensuite le contrôle de l'ensemble de la zone concernée par l'opération, en assurant un balayage de cette zone grâce à un déplacement conjoint de la source 16 et de la caméra numérique 24. Plus précisément, on déplace pas à pas ces deux appareils selon une trajectoire prédéterminée qui permet de contrôler toute la zone concernée. Ce déplacement est effectué de préférence de façon automatisée, grâce à un logiciel qui agit sur les moteurs assurant le pivotement de la source 16 sur son support 18 et le déplacement de la caméra numérique 24 sur les rails 26 et, éventuellement, sur le mécanisme associé. En variante, il peut toutefois être effectué manuellement, sans sortir du cadre de l'invention.

A chaque arrêt de l'ensemble formé par la source 16 et par la caméra 24, un nouveau tir est effectué. On acquiert ainsi une succession d'images numérisées, dont l'ensemble représente la totalité de la zone contrôlée.

La description qui précède montre que le procédé et le dispositif conforme à l'invention permettent de contrôler une structure mécanique de grandes dimensions en un temps beaucoup plus court que les procédés et dispositifs existants mettant en oeuvre des moyens de détection constitués par des films photographiques. En effet, l'analyse en temps réel de l'image délivrée par la caméra numérique autorise une modification quasiment instantanée des réglages de la source et de l'alignement source-caméra numérique dés le premier tir, sans aucun développement. De plus, l'acquisition d'une image à l'aide de la caméra numérique est sensiblement plus rapide qu'en utilisant un film photographique.

Le deuxième mode de réalisation de l'invention illustré sur la figure 2 diffère essentiellement du précédent par le fait que la source directionnelle 16 est remplacée par une source panoramique 16', montée de façon fixe sur le support 18. Toutes les autres caractéristiques du dispositif sont inchangées.

De façon générale, la mise en oeuvre du dispositif de contrôle illustré sur la figure 2 est comparable à celle du dispositif de la figure 1. La seule différence découle du fait que la source 16' est panoramique et fixe. Elle émet un faisceau de rayons X qui balaye la totalité de la zone du fuselage 10 dont on désire effectuer le contrôle. Par conséquent, seule la caméra numérique est déplacée pas à pas selon une trajectoire prédéterminée lors de l'étape d'acquisition d'images.

Par hypothèse, ce mode de réalisation supprime tout problème d'alignement. Dans ce cas, l'analyse en temps réel de la première image obtenue et les modifications éventuels de réglage qui sont ensuite effectués, conformément à l'invention, ne concernent que la longueur d'onde du faisceau de rayons X, le niveau de dose et le temps de pose.

Bien entendu, l'invention n'est pas limitée au mode de réalisation qui vient d'être décrit à titre d'exemple. En particulier et comme on l'a déjà mentionné, le procédé et le dispositif de contrôle conforme à l'invention peuvent être utilisés pour contrôler toute structure de grandes dimensions, quelle que soit la nature de ladite structure et quelle que soit la nature du ou des matériaux qui la constituent. Dans le cas où le détecteur et la source sont tous deux mobiles, le détecteur peut être asservi à la source, comme on l'a décrit en référence à la figure 1, ou inversement. Enfin, dans le cas d'une structure fermée telle qu'un fuselage d'aéronef, l'agencement décrit peut être inversé, c'est-à-dire que le détecteur est alors placé à l'intérieur de la structure et la source à l'extérieur de ladite structure.

## Revendications

1. Procédé de contrôle non destructif d'une structure (10), selon lequel on exécute une première étape d'acquisition d'image consistant à émettre un faisceau de rayons X à l'aide d'une source (16, 16') émettrice de rayons X placée d'un côté de la structure et à détecter ledit faisceau de l'autre côté de la structure, de façon à obtenir une image de la structure traversée par les rayons X, **caractérisé en ce qu'**on détecte ledit faisceau au moyen d'une caméra numérique (24) détectant les rayons X, on analyse en temps réel l'image de la structure (10) délivrée par la caméra numérique (24), afin de déterminer si cette image est exploitable ou non et, s'il est déterminé que l'image n'est pas exploitable, on modifie au moins un réglage de ladite source (16, 16') et on exécute alors une nouvelle étape d'acquisition d'image et une nouvelle analyse de ladite image en temps réel.

2. Procédé selon la revendication 1, dans lequel on détermine que l'image n'est pas exploitable lorsque l'une au moins des grandeurs constituées par le niveau de gris et la netteté de l'image ne permet pas de détecter d'éventuels défauts recherchés dans ladite structure (10).

3. Procédé selon la revendication 2, dans lequel, lorsque le niveau de gris de l'image ne permet pas de détecter d'éventuels défauts recherchés dans ladite structure (10), on modifie l'un au moins des réglages de la source (16, 16') constitués par la longueur d'onde du faisceau de rayons X, le niveau de dose et le temps de pose.

4. Procédé selon l'une quelconque des revendications 2 et 3, dans lequel on utilise une source (16) directionnelle et, lorsque la netteté de l'image ne permet pas de détecter d'éventuels défauts recherchés dans ladite structure (10), on modifie l'orientation de la source.

5. Procédé selon l'une quelconque des revendications précédentes, dans lequel, s'il est déterminé que l'image n'est pas exploitable, on modifie automatiquement, en temps réel, au moins un réglage de la source (16, 16').

6. Procédé selon l'une quelconque des revendications précédentes, dans lequel on utilise une source (16) directionnelle et on déplace simultanément, de manière automatisée, la source (16) et la caméra numérique (24) selon un trajet prédéterminé, de façon à balayer une zone à contrôler de ladite structure (10).

7. Procédé selon l'une quelconque des revendications 1 à 5, dans lequel on utilise une source (16') panoramique et on déplace la caméra numérique (24) de manière automatisée selon un trajet prédéterminé, de façon à balayer une zone à contrôler de ladite structure (10).

8. Dispositif de contrôle non destructif d'une structure (10), comprenant une source (16, 16') émettrice de rayons X apte à être placée d'un côté de la structure (10) et à émettre un faisceau de rayons X, des moyens de détection dudit faisceau, aptes à être placés de l'autre côté de la structure (10), de façon à obtenir une image de la structure traversée par les rayons X, **caractérisé en ce que** les moyens de détection comprennent une caméra numérique (24) détectant les rayons X, le dispositif de contrôle comprenant de plus des moyens (28) pour analyser en temps réel l'image de la structure délivrée par la caméra numérique (24), afin de déterminer si cette image est exploitable ou non, et des moyens (20) pour modifier au moins un réglage de la source (16, 16'), s'il est déterminé que l'image n'est pas exploitable.

9. Dispositif selon la revendication 8, dans lequel les moyens (28) pour analyser en temps réel l'image de la structure (10) déterminent que l'image n'est pas exploitable lorsque l'une au moins des grandeurs constituées par le niveau de gris et la netteté de l'image ne permet pas de détecter d'éventuels défauts recherchés dans ladite structure (10).

10. Dispositif selon la revendication 9, dans lequel, lorsque le niveau de gris de l'image ne permet pas de détecter d'éventuels défauts recherchés dans ladite structure (10), on agit sur les moyens (20) pour modifier au moins un réglage de la source (16, 16'), de façon à modifier au moins l'un des réglages constitués par la longueur d'onde du faisceau de rayons X, le niveau de dose et le temps de pose.

11. Dispositif selon l'une quelconque des revendications 9 et 10, dans lequel la source (16) est directionnelle et, lorsque la netteté de l'image ne permet pas de détecter d'éventuels défauts recherchés dans ladite structure (10), on agit sur les moyens (20) pour modifier au moins un réglage de la source (16), de façon à modifier l'orientation de la source (16).

12. Dispositif selon l'une quelconque des revendications 8 à 11, dans lequel les moyens (20) pour modifier au moins un réglage de la source (16, 16') agissent sur celle-ci en temps réel.

13. Dispositif selon l'une quelconque des revendications 8 à 12, dans lequel la source émettrice de rayons X est une source (16) directionnelle et le dispositif de contrôle comprend de plus des moyens (20) pour déplacer simultanément, de manière automatisée, la source (16) et la caméra numérique (24) selon un trajet prédéterminé, de façon à balayer une zone à contrôler de ladite structure (10).

14. Dispositif selon l'une quelconque des revendications 8 à 12, dans lequel la source émettrice de rayons X est une source (16') panoramique et le dispositif de contrôle comprend de plus des moyens (20) pour déplacer la caméra numérique (24) de manière automatisée selon un trajet prédéterminé, de façon à balayer une zone à contrôler de ladite structure (10).
